# EUROPÄISCHE PATENTANMELDUNG

(11) **EP 3 731 407 A1**
(43) Veröffentlichungstag der Anmeldung: **28.10.2020**
(21) Anmeldenummer: 19170865.0
(22) Anmeldetag: 24.04.2019
(51) Int. Cl.: H02P 27/16, H02M 7/00

(54) **ELEKTRISCHE MASCHINE MIT UMRICHTER**

(71) Anmelder: Siemens Aktiengesellschaft, 80333 München (DE)
(72) Erfinder: Deeg, Christian, 90518 Altdorf (DE); Kuhn, Harald, 90491 Nürnberg (DE); Maul, Christian, 90489 Nürnberg (DE); Tischmacher, Hans, 91207 Lauf (DE)

(57) **Zusammenfassung**

Die Erfindung betrifft eine Elektrische Maschine (10,16) mit einem Ständer (12) sowie einem gegenüber dem Ständer (12) bewegbar angeordneten Läufer (14), wobei die elektrische Maschine (10,16) für einen Betrieb an einem Wechselspannungsnetz (18) ausgebildet ist, das wenigstens eine Wechselspannungsphase (20,22,24) bereitstellt, und wobei der Ständer (12) und/oder der Läufer (14) eine wenigstens zweiphasige Maschinenwicklung (26) aufweist. Erfindungsgemäß umfasst die elektrische Maschine (10,16) einen am Ständer (12) angeordneten Direktumrichter (28), der einerseits mit dem Wechselspannungsnetz (18) elektrisch koppelbar und andrerseits an die wenigstens zwei Phasen (30,32,34) der wenigstens zweiphasigen Maschinenwicklung (26) angeschlossen ist, zu welchem Zweck der Direktumrichter (28) eine Mehrzahl von Schaltelementen (36) zum elektrischen Koppeln der wenigstens einen Wechselspannungsphase (20,22,24) mit einer jeweiligen der Phasen (30,32,34) der wenigstens zweiphasigen Maschinenwicklung (26) abhängig von einem jeweiligen Schaltzustand des jeweiligen Schaltelements (36) aufweist.

## Beschreibung

Die Erfindung betrifft eine elektrische Maschine mit einem Ständer sowie einem gegenüber dem Ständer bewegbar angeordneten Läufer, wobei die elektrische Maschine für einen Betrieb an einem Wechselspannungsnetz ausgebildet ist, das wenigstens eine Wechselspannungsphase bereitstellt, und wobei der Ständer und/oder der Läufer eine wenigstens zweiphasige Maschinenwicklung aufweist.

Gattungsgemäße elektrische Maschinen sind dem Grunde nach im Stand der Technik umfänglich bekannt, so dass es eines gesonderten druckschriftlichen Nachweises hierfür nicht bedarf. Eine elektrische Maschine ist eine Vorrichtung die elektrische Energie in mechanische Energie, insbesondere Bewegungsenergie, in einem Motorbetrieb und/oder mechanische Energie in eine elektrische Energie in einem Generatorbetrieb umformt. Bei der Bewegung handelt es sich in der Regel um eine Drehbewegung, die vom Läufer gegenüber dem Ständer ausgeführt wird. Je nach Maschinenkonstruktion kann die Bewegung jedoch zumindest teilweise auch eine translatorische Bewegung sein. Der Ständer ist im Unterschied zum Läufer in der Regel fixiert, insbesondere bei rotierenden elektrischen Maschinen drehfest, angeordnet, das heißt, bei einer Drehbewegung handelt es sich um eine Drehbewegung des Läufers gegenüber dem Ständer.

Insbesondere bei einer rotierenden elektrischen Maschine ist dem Grunde nach ein Ständer als Stator vorgesehen, der in der Regel eine im Wesentlichen kreisförmige Öffnung zum Aufnehmen eines als Rotor ausgebildeten Läufers bereitstellt. In der Öffnung ist der Läufer drehbar gelagert angeordnet, wobei zwischen dem Läufer und dem Ständer ein Luftspalt ausgebildet ist.

Der Ständer und der Läufer sind im bestimmungsgemäßen Betrieb der elektrischen Maschine mittels eines magnetischen Flusses verkettet, wodurch im Motorbetrieb die Kraftwirkung, nämlich das Drehmoment, erzeugt wird, die den Läufer gegenüber dem Ständer antreibt. Im Generatorbetrieb wird dem Läufer zugeführte mechanische Energie, beispielsweise in Form einer Rotation unter Einwirkung eines Drehmoments, in elektrische Energie umgewandelt. Zu diesem Zweck weisen der Ständer und der Läufer jeweils eine von einem Strom durchflossene Wicklung auf. Im Ständer oder im Läufer kann die Wicklung auch durch einen Permanentmagneten gebildet oder ergänzt sein.

Rotierende elektrische Maschinen der gattungsgemäßen Art sind beispielsweise Drehfeldmaschinen, die an ein mehrphasiges, insbesondere dreiphasiges elektrisches Energieversorgungsnetz angeschlossen sind, wie beispielsweise Synchronmaschinen, Synchronmaschinen mit Dämpferkäfig, Asynchronmaschinen oder dergleichen.

Zumindest ständerseitig ist in der Regel ein Blechpaket vorgesehen, welches dazu dient, den magnetischen Fluss im bestimmungsgemäßen Betrieb in vorgegebener Weise zu führen, um die gewünschte Funktion der elektrischen Maschine realisieren zu können oder diese zumindest zu unterstützen. Das Blechpaket besteht in der Regel zumindest teilweise aus einzelnen, untereinander elektrisch isolierten ferromagnetischen Blechen. Die Bleche können je nach Verwendungszweck auch als Dynamoblech, Motorenblech, Transformatorenblech oder dergleichen bezeichnet sein. Derartige Bleche unterliegen der Normung, beispielsweise EN 10106, EN 10107 und/oder dergleichen. Darüber hinaus kann das Blechpaket zumindest teilweise auch aus einem ferromagnetischen Ferrit oder dergleichen gebildet sein, der vorzugsweise eine geringe elektrische Leitfähigkeit aufweist, zu welchem Zweck der Ferrit beispielsweise Fe₂O₃ umfasst oder dergleichen. Vorzugsweise handelt es sich bei einem derartigen Werkstoff um einen Sinterwerkstoff.

Üblicherweise sind stromführende Wicklungen in das Blechpaket eingelassen, die im bestimmungsgemäßen Betrieb der elektrischen Maschine, bei dem die jeweiligen Wicklungen mit einem elektrischen Strom beaufschlagt sind, den entsprechenden magnetischen Fluss bereitstellen. Die Wicklung ist häufig zumindest teilweise in das Blechpaket integriert angeordnet. Die Wicklung stellt die Maschinenwicklung dar und kann beispielsweise eine Läuferwicklung, eine Ständerwicklung sowie auch eine Kombination hiervon sein.

Das Blechpaket bezeichnet also einen aus ferromagnetischen Werkstoffen hergestellten und damit magnetisierbaren, vorzugsweise schichtweise aufgebauten Körper. Die Aufgabe des Blechpakets besteht somit insbesondere darin, in Verbindung mit der stromdurchflossenen Maschinenwicklung den magnetischen Fluss zu führen, beispielsweise zu bündeln.

Im bestimmungsgemäßen Betrieb der insbesondere rotierenden elektrischen Maschine nimmt der Ständer die Reaktio in Bezug auf ein Läuferdrehmoment auf und stützt sich gegen eine Auflage ab, um drehfest angeordnet zu sein. Die Abstützung kann durch ein Fundament oder dergleichen als Auflage gebildet sein.

Mittlerweile ist es weit verbreitet, derartige elektrische Maschinen mittels eines Umrichters mit dem Wechselspannungsnetz zu koppeln. Soll der Umrichter zumindest teilweise in die elektrische Maschine integriert werden, ist in der Regel ein möglichst kompakter Aufbau des Umrichters, insbesondere seiner Leitungselektronik, gewünscht. Darüber hinaus steigen die Anforderungen in Bezug auf Netzrückwirkungen von Antriebssystemen mit elektrischen Maschinen und Umrichtern weiter an.

Es ist beispielsweise möglich, ein System aus einer rotierenden elektrischen Maschine und einem Umrichter dadurch zu bilden, dass ein Gleichrichter integriert ist. Dabei können im Wesentlichen zwei Varianten unterschieden werden.

Bei jeder Art der Integration muss ein Kompromiss zwischen Wärmeabfuhr der Bauelemente, Systemvolumen, Lebensdauer und Funktionalität getroffen werden. Teilweise sind die Anforderungen gegenläufig. Eine hohe Lebensdauer des Zwischenkreis erfordert zum Beispiel eine große Zwischenkreiskapazität, was jedoch dem Wunsche eines geringen Systemvolumens negativ beeinflusst.

Bei einer ersten Variante können Netzrückwirkungen durch den Einsatz eines selbstgeführten Umrichters als Active Front End (AFE) reduziert werden. Zusätzlich ergibt sich hier der Vorteil, dass Energie zurück in das Wechselspannungsnetz gefördert werden kann.

Bei einer zweiten Variante wird in der Regel eine netzgeführte Einspeisung, beispielsweise basierend auf einem Dioden Front End (DFE), oder auch eine Lösung mit einer kleinen Kapazität des Zwischenkreiskondensators (Fundamental Front End - F3E) gewählt. Dabei treten jedoch häufig Probleme in Bezug auf eine Kühlung von Bauteilen auf. Insbesondere erweisen sich die Kondensatoren des Zwischenkreises als besondere Schwachstelle.

Um die erforderliche elektrische Kapazität erreichen zu können, werden in der Regel Elektrolytkondensatoren als Zwischenkreiskondensatoren eingesetzt, die eine hohe Ladungsspeicherdichte bezüglich elektrischer Ladung aufweisen. Gleichwohl sind Elektrolytkondensatoren jedoch empfindlich in Bezug auf hohe Temperaturen. Andere Kondensatortypen, beispielsweise Folienkondensatoren oder Keramikkondensatoren, sind in Bezug auf eine thermische Beanspruchung unempfindlicher, jedoch haben sie eine deutlich geringere Ladungsspeicherdichte, wodurch sich bei vergleichbarem Bauvolumen auch eine entsprechend geringere elektrische Kapazität einstellt. Dies kann zu Nachteilen in Bezug auf ein Regelverhalten oder auch in Bezug auf einen kompakten Aufbau führen. Darüber hinaus erweisen sich Netzrückwirkungen bei einer derartigen Einspeisevariante als ungünstig.

Insgesamt besteht weiterer Bedarf an einem verbesserten Aufbau des Umrichters, um die Integration in die elektrische Maschine besser realisieren zu können.

Der Erfindung liegt folglich die Aufgabe zugrunde, die zumindest teilweise Integration eines Umrichters in eine elektrische Maschine weiter zu verbessern.

Als Lösung wird mit der Erfindung eine elektrische Maschine gemäß dem unabhängigen Anspruch 1 vorgeschlagen.

Vorteilhafte Weiterbildungen ergeben sich durch Merkmale der abhängigen Ansprüche.

In Bezug auf eine gattungsgemäße elektrische Maschine wird mit der Erfindung insbesondere vorgeschlagen, dass die elektrische Maschine einen am Ständer angeordneten Direktumrichter aufweist, der einerseits mit dem Wechselspannungsnetz elektrisch koppelbar und andererseits an die wenigstens zwei Phasen der wenigstens zweiphasigen Maschinenwicklung angeschlossen ist, zu welchem Zweck der Direktumrichter eine Mehrzahl von Schaltelementen zum elektrischen Koppeln der wenigstens einen Wechselspannungsphase mit der jeweiligen der Phasen der wenigstens zweiphasigen Maschinenwicklung abhängig von einem jeweiligen Schaltzustand des jeweiligen Schaltelements aufweist.

Die Erfindung basiert insbesondere auf dem Gedanken, dass durch Nutzung des Direktumrichters die Möglichkeit besteht, den Aufwand für Kondensatoren, insbesondere Zwischenkreiskondensatoren, die einen hohen Anteil des Bauvolumens ausmachen, zu reduzieren. Durch den Direktumrichter ist es nämlich möglich, die erforderliche Kapazität insgesamt reduzieren zu können, wodurch Einsparungen in Bezug auf den Bauraum erreicht werden können. Darüber hinaus werden dadurch zusätzliche Freiheitsgrade geschaffen, den Umrichter konstruktiv so zu gestalten, dass er möglichst günstig in die elektrische Maschine integriert werden kann.

Direktumrichter, wie zum Beispiel Matrixumrichter beziehungsweise Matrix-Konverter, nutzen eine direkte Umrichtertopologie. Anders als Strom- oder Spannungszwischenkreisumrichter mit einem Energiespeicher weisen Direktumrichter keinen Aufbau auf, der einzelne Module wie Gleichrichter oder Wechselrichter umfasst. Sie sind vielmehr dazu ausgebildet, die entsprechende Energiewandlungsfunktionalität beziehungsweise Umrichterfunktion in einer Stufe, auch Matrix genannt, im Wesentlichen unmittelbar durchzuführen. Die Matrix umfasst Matrixelemente, die eine jeweilige Schaltfunktion bereitstellen und die abhängig von einem jeweiligen Schaltzustand die wenigstens eine Phase des Wechselspannungsnetzes mit einer jeweiligen Phase der wenigstens zweiphasigen Maschinenwicklung zu koppeln vermögen. Ein Direktumrichter, der ein dreiphasiges Wechselspannungsnetz mit einer dreiphasigen Maschinenwicklung koppelt, weist somit wenigstens neun Matrixelemente beziehungsweise Schaltelemente auf, um die gewünschte Funktionalität realisieren zu können.

Die Matrixelemente des Direktumrichters bilden somit die Schaltelemente zum gesteuerten elektrischen Koppeln der wenigstens einen Wechselspannungsphase mit der jeweiligen der Phasen der wenigstens zweiphasigen Maschinenwicklung.

Durch die Nutzung des Direktumrichters kann die Integration des Umrichters in die elektrische Maschine deutlich verbessert werden, weil der Direktumrichter im Wesentlichen ohne einen Zwischenkreis realisiert werden kann. Die bei konventionellen Umrichtern erforderlichen Kapazitäten des Zwischenkreises können dadurch zumindest teilweise eingespart werden. Dadurch kann ein deutlich reduziertes Bauvolumen für den Umrichter erreicht werden, so dass die Integration in die elektrische Maschine erheblich erleichtert werden kann.

Insbesondere durch den Wechsel von der üblichen 2-Punkt-Topologie plus Gleichrichter auf die Matrixtopologie des Direktumrichters kann erreicht werden, dass Kondensatoren zur Energiespeicherung, insbesondere in Bezug auf den Zwischenkreis, reduziert, wenn nicht sogar vollständig eingespart werden können. Besonders Elektrolytkondensatoren können dadurch vermieden werden, sodass lediglich die Matrixelemente beziehungsweise die Schaltelemente erforderlich zu sein brauchen, die im Vergleich zu Elektrolytkondensatoren jedoch erheblich temperaturunempfindlicher sind. Etwaig erforderliche Kondensatoren in Bezug auf eine wechselspannungsnetzseitige Anpassung, insbesondere in Bezug auf eine Entstörung, können darüber hinaus abgesetzt beziehungsweise thermisch unkritisch, beispielsweise in der Nähe von Anschlussklemmen des Systems aus elektrischer Maschine und Umrichter angeordnet sein.

Ein Schaltelement im Sinne dieser Offenbarung ist dabei vorzugsweise ein steuerbares elektronisches Schaltelement, beispielsweise ein steuerbarer elektronischer Halbleiterschalter der vorzugsweise zum bidirektionalen Sperren ausgebildet ist, indem beispielsweise zwei Transistoren antiseriell geschaltet vom Schaltelement umfasst sind, zwei antiparallel geschaltete Thyristoren vom Schaltelement umfasst sind, Kombinationsschaltungen hiervon, insbesondere mit parallelgeschalteten Inversdioden, beispielsweise unter Nutzung von Gate-Turn-Off-Thyristoren (GTO), unter Nutzung von Insulated-Gate-BipolarTransistoren (IGBT), Kombinationen hiervon oder dergleichen. Dem Grunde nach kann das Schaltelement jedoch auch Feldeffekttransistoren umfassen, insbesondere Metalloxide-Semiconductor-Field-Effect-Transistoren (MOSFET) oder dergleichen.

Zur Bereitstellung der gewünschten Energiewandlungsfunktionalität des Umrichters werden die Schaltelemente im Schaltbetrieb betrieben. In Bezug auf einen Halbleiterschalter unter Nutzung eines Transistors bedeutet der Schaltbetrieb, dass der Transistor in einem eingeschalteten Schaltzustand zwischen den eine Schaltstrecke bildenden Anschlüssen des Transistors einen sehr kleinen elektrischen Widerstand bereitstellt, sodass ein hoher Stromfluss bei sehr kleiner Restspannung möglich ist. In einem ausgeschalteten Schaltzustand ist hingegen die Schaltstrecke des Transistors hochohmig, das heißt, sie stellt einen hohen elektrischen Widerstand bereit, sodass auch bei hoher, an der Schaltstrecke anliegender elektrischer Spannung im Wesentlichen kein oder nur ein sehr geringer, insbesondere vernachlässigbarer, Stromfluss vorliegt. Hiervon unterscheidet sich ein Linearbetrieb bei Transistoren, der aber bei Umrichtern der gattungsgemäßen Art in der Regel nicht zum Einsatz kommt.

Das Schaltelement weist zur Realisierung der Schaltfunktionalität wenigstens einen Steueranschluss auf, an dem es mit von einer Steuereinheit bereitgestellten Schaltsignalen beaufschlagbar ist, sodass die gewünschte Schaltfunktion des Schaltelements realisiert werden kann. Das Schaltsignal kann ein binäres Schaltsignal sein, welches zwei Zustandswerte einnehmen kann, um die gewünschte Schaltfunktion des Schaltelements bereitstellen zu können. Beispielsweise kann das Schaltsignal eine Impulsfolge umfassen, mittels der der Steueranschluss beaufschlagt wird. Dies ist vor allem bei Thyristoren und GTO zweckmäßig. Darüber hinaus kann bei Transistoren vorgesehen sein, dass das Schaltsignal als Rechtecksignal ausgebildet ist, wobei ein jeweiliger Schaltzustand des Schaltelements einem der elektrischen Potentiale des Rechtecksignals zugeordnet werden kann. Ein solches Signal ist beispielsweise für Transistoren, insbesondere für bipolare Transistoren, Feldeffekttransistoren oder dergleichen zweckmäßig. Ein zeitliches Verhältnis der beiden elektrischen Potentiale bestimmt in der Regel das Tastverhältnis.

Der Umrichter kann eine Steuereinheit umfassen, die die Funktionalität in Bezug auf das Erzeugen der Schaltsignale bereitstellt. Auch weitere Funktionen insbesondere des Umrichters, vorzugsweise in Bezug auf den Betrieb des Umrichters, können durch die Steuereinheit realisiert sein, beispielsweise Überwachungsfunktionen, Sicherheitsfunktionen und/oder dergleichen. Zu diesem Zweck kann die Steuereinheit eine Hardwareschaltung und/oder eine programmgesteuerte Rechnereinheit oder dergleichen umfassen. Natürlich kann die Steuereinheit als separate Baugruppe ausgebildet sein. Die Steuereinheit kann darüber hinaus zumindest teilweise auch von einer übergeordneten Steuerung für die elektrische Maschine, beispielsweise eine Steuerung einer Antriebseinrichtung, die die elektrische Maschine nutzt oder dergleichen, umfasst sein.

Die Maschinenwicklung kann dem Grunde nach wenigstens zweiphasig ausgebildet sein. Vorzugsweise ist sie jedoch zumindest dreiphasig ausgebildet. Die Maschinenwicklung kann als Ständerwicklung oder auch als Läuferwicklung ausgebildet sein. Natürlich kann sowohl eine Ständerwicklung als auch eine Läuferwicklung durch die Maschinenwicklung gebildet sein. Vorzugsweise ist die Anzahl der Phasen der elektrischen Maschine beziehungsweise der Maschinenwicklung an die Anzahl der Phasen des Wechselspannungsnetzes angepasst. Besonders bevorzugt ist deshalb eine dreiphasige Ausgestaltung der Maschinenwicklung, die mit einem dreiphasigen Wechselspannungsnetz gekoppelt werden kann.

Es wird ferner vorgeschlagen, dass der Direktumrichter für eine jeweilige Phase der wenigstens zweiphasigen Maschinenwicklung und/oder für die wenigstens eine Wechselspannungsphase jeweils wenigstens eine Stromschiene aufweist, die abhängig von wenigstens einer geometrischen Abmessung des Ständers ausgebildet ist. Die Abmessung kann beispielsweise ein Radius einer äußeren Abmessung des Ständers sein, eine Breite, eine Höhe und/oder eine axiale Erstreckung des Ständers. Natürlich kann die Stromschiene nicht nur abhängig von einer einzigen geometrischen Abmessung des Ständers, sondern auch von zwei oder mehreren geometrischen Abmessungen des Ständers ausgebildet sein, sodass sie vorzugsweise angepasst an die geometrischen Abmessungen des Ständers ausgebildet ist. Dadurch kann die Integrierbarkeit des Umrichters in die elektrische Maschine weiter verbessert werden. Die wenigstens eine Abmessung kann auch eine Krümmung des Ständers in eine Umfangrichtung senkrecht zu einer Längserstreckung beziehungsweise einer axialen Erstreckung des Ständers beziehungsweise der elektrischen Maschine sein.

Eine Stromschiene, häufig auch Sammelschiene genannt, ist ein Bauelement in der elektrischen Energieversorgung und dient dazu, elektrische Energie aufgrund eines Stromflusses von einer ersten elektrischen Einheit zu einer zweiten elektrischen Einheit oder umgekehrt zu führen. Elektrische Einheiten können beispielsweise elektrische Verbraucher sein, in denen die zugeführte elektrische Energie für die Ausführung einer bestimmungsgemäßen Funktion genutzt wird, beispielsweise Schaltelemente oder dergleichen, sowie Energiequellen, beispielsweise elektrische Generatoren auf Basis von elektrischen Maschinen, optoelektrische Wandler, beispielsweise Solarzellen oder dergleichen, Brennstoffzellen, das Wechselspannungsnetz und/oder dergleichen. Eine Stromschiene weist neben einer hohen elektrischen Leitfähigkeit eine geeignete mechanische Festigkeit auf, sodass der Einfluss von mechanischen Kräften, wie sie beispielsweise bei Überströmen auftreten können, von der Stromschiene geführt werden können, ohne dass deren bestimmungsgemäße Funktion dadurch im Wesentlichen beeinträchtigt wird. Häufig ist die Stromschiene darüber hinaus thermisch hoch belastbar, sodass sie auch in thermisch exponierten Bereichen ihre bestimmungsgemäße Funktion im Wesentlichen zuverlässig ausführen kann.

Die Stromschiene weist in der Regel einen Grundkörper aus einem elektrisch leitfähigen Werkstoff auf, der Anschlüsse für die elektrischen Einheiten bereitstellt. Als Werkstoff wird häufig ein Metall wie Aluminium, Kupfer, Legierungen hiervon, gegebenenfalls mit weiteren Metallen, und/oder dergleichen genutzt. Stromschienen sind im Übrigen in der Regel sicherheitsrelevante Bauteile in der Elektrotechnik, weshalb sie unter anderem auch von der Normung erfasst sind, so beispielsweise durch die DIN 43671, DIN 43673, DIN 43771 sowie weitere. Stromschienen finden jedoch nicht nur in der stationären Energieverteilung Verwendung, sondern finden sich darüber hinaus auch in elektrischen Anlagen von Fahrzeugen, sowie weiteren elektrischen Einrichtungen, insbesondere Umrichtern, in denen elektrische Energie insbesondere im größeren Umfang verteilt wird.

Vorzugsweise sind die Stromschienen zumindest teilweise elektrisch isoliert zueinander angeordnet. Zu diesem Zweck kann vorgesehen sein, dass die Stromschienen eine elektrische Isolierung umfassen, die an ihrem äußeren Umfang angebracht ist. Zumindest in Kontaktierungsbereichen kann diese Isolierung jedoch ausgespart sein, sodass eine zuverlässige dauerhafte elektrische Kontaktierung durch die jeweilige elektrische Einheit, beispielsweise das Schaltelement oder auch eine weitere Stromschiene, gewährleistet werden kann.

Vorzugsweise wird vorgeschlagen, dass zumindest teilweise jeweils wenigstens eine Stromschiene für eine jeweilige Phase der wenigstens zweiphasigen Maschinenwicklung und wenigstens eine Stromschiene für die wenigstens eine Wechselspannungsphase vorgesehen sind, wobei die Stromschienen stabförmig mit einer rechteckigen Querschnittsfläche ausgebildet sind, wobei die maschinenwicklungsseitigen Stromschienen einerseits und die wechselspannungsphasenseitigen Stromschiene andererseits in Bezug auf eine Montageposition am Ständer in unterschiedlichen Ebenen angeordnet sind und wobei insbesondere die ständerwicklungsseitigen Stromschienen orthogonal zu den wechselspannungsphasenseitigen Stromschienen angeordnet sind. Durch diesen Aufbau der Stromschienen kann auf besonders einfache und kompakte Weise der Direktumrichter realisiert werden. Der diesbezügliche Aufbau kann darüber hinaus ebenfalls auf besonders einfache Weise in die elektrische Maschine integriert werden. Der Direktumrichter kann auf diese Weise zum Beispiel quaderförmig ausgebildet sein und hinsichtlich seiner Abmessungen an die Abmessungen der elektrischen Maschine, insbesondere einer Seite der elektrischen Maschine angepasst ausgebildet sein, sodass er auf einfache Weise in diese Maschine integriert werden kann.

Weiterhin wird vorgeschlagen, dass die Schaltelemente an Kreuzungspunkten der ständerwicklungsseitigen Stromschienen mit der wenigstens einen wechselspannungsphasenseitigen Stromschiene angeordnet sind. Dadurch können die Schaltelemente besonders einfach in Bezug auf die Stromschienen angeordnet und mit diesen in geeigneter Weise elektrisch verbunden werden, sodass der Direktumrichter besonders einfach realisiert werden kann. Die Schaltelemente können beispielsweise, insbesondere wenn sie als Halbleiterchip ausgebildet sind, direkt mit den jeweiligen Stromschienen an den Kreuzungspunkten elektrisch verbunden sein. Beispielsweise kann hierzu vorgesehen sein, dass die Halbleiterchips zumindest teilweise durch Sintern mit den Stromschienen elektrisch verbunden sind. Darüber hinaus können die Stromschienen natürlich auch mittels anderer Techniken mit den Schaltelementen mechanisch und elektrisch verbunden sein, beispielsweise indem die Schaltelemente mit den Stromschienen verklebt sind und gegebenenfalls eine elektrische Verbindung mittels Bonding, insbesondere Direct Bonding, hergestellt wird.

Darüber hinaus wird vorgeschlagen, dass die Stromschienen zumindest teilweise nach Art von Kreisringsegmenten ausgebildet sind, wobei die Stromschienen für die wenigstens zweiphasige Maschinenwicklung in einer Ebene radial beabstandet zu der wenigstens einen Stromschiene für die wenigstens eine Wechselspannungsphase angeordnet sind. Diese Ausgestaltung eignet sich insbesondere für eine stirnseitige Anordnung des Direktumrichters bei einer rotierenden elektrischen Maschine, beispielsweise wenn der Direktumrichter an einem von zwei axialen Enden der elektrischen Maschine integriert ist. Der Umrichter kann somit in Umfangsrichtung verteilt ausgebildet werden, wodurch eine besonders einfache und kompakte Integration in die elektrische Maschine erreicht werden kann.

Ferner wird vorgeschlagen, dass ein jeweiliges der Schaltelemente mit einem ersten Anschluss an ein jeweiliges der Kreisringsegmente der maschinenwicklungsseitigen Stromschienen und mit einem zweiten Anschluss an das wenigstens eine Kreisringsegment der wenigstens einen wechselspannungsphasenseitigen Stromschiene angeschlossen ist. Auf diese Weise lässt sich eine besonders einfache Gestaltung des Direktumrichters erreichen. Besonders vorteilhaft erweist es sich dabei, dass diese Ausgestaltung lediglich eine einzige Montageebene benötigt, um realisiert zu werden. Unabhängig davon kann natürlich vorgesehen sein, dass der Direktumrichter in mehreren Ebenen entsprechend ausgebildet ist. Diese Ausgestaltung hat besonders dann Vorteile, wenn eine hohe Anzahl an Phasen bezüglich der Maschinenwicklung und/oder bezüglich des Wechselspannungsnetzes vorhanden ist.

Vorzugsweise sind die Schaltelemente durch antiseriell geschaltete Transistoren gebildet. Derartige Schaltelemente können dann so ausgebildet sein, dass sie nicht nur einen einzigen Steueranschluss aufweisen, sondern vorzugsweise zwei Steueranschlüsse, wobei ein jeweiliger Steueranschluss einem jeweiligen der Transistoren zugeordnet ist. Vorzugsweise umfassen die Transistoren dann auch parallelgeschaltete Inversdioden. Die Transistoren können durch bipolare Transistoren oder auch durch Feldeffekttransistoren sowie auch durch Kombinationen hiervon gebildet sein.

Gemäß einer Weiterbildung wird vorgeschlagen, dass die Transistoren gehäuselos ausgebildet und insbesondere mittels Direct Bonding unmittelbar an die Stromschienen angeschlossen sind. Dadurch kann eine besonders effiziente Verbindung der Stromschienen mit den Transistoren erreicht werden, die darüber hinaus einen hohen Grad der Kompaktheit erlaubt. Aufwendige Gehäuse können eingespart werden, wodurch zugleich auch ein thermischer Widerstand vom Transistor zum Abführen von Wärme reduziert werden kann. Besonders vorteilhaft können die Stromschienen somit auch zur Abführung von im bestimmungsgemäßen Betrieb der Transistoren auftretender Wärme genutzt werden. Zu diesem Zweck kann vorgesehen sein, dass die Stromschienen zumindest teilweise auch mit einer oder mehrerer Wärmesenken, beispielsweise nach Art eines Kühlkörpers oder dergleichen, thermisch aber jedoch elektrisch isoliert verbunden sind. Dadurch kann die Integrationsdichte noch weiter verbessert werden.

Weiterhin wird vorgeschlagen, dass der Direktumrichter zumindest teilweise in einem Lagerschild der elektrischen Maschine angeordnet ist. Auf diese Weise kann der Direktumrichter besonders einfach in die elektrische Maschine integriert werden. Durch die Erfindung ist es also möglich, den Direktumrichter auch nachträglich bei einer bestehenden Maschinenkonstruktion einfach durch Austausch des Lagerschildes zusätzlich zu integrieren. Diese Ausgestaltung eignet sich daher nicht nur aber besonders für die Nachrüstung von bereits bestehenden elektrischen Maschinen.

Ferner wird vorgeschlagen, dass die elektrische Maschine ein Gehäuse aufweist, wobei der Direktumrichter zumindest teilweise in wenigstens einer Seitenwand des Gehäuses angeordnet ist. Der Direktumrichter kann somit insbesondere bei im Wesentlichen quaderförmigen Gehäusen oder dergleichen einfach integriert werden. Besonders vorteilhaft ist diese Weiterbildung für Einrichtungen, die eine elektrische Maschine mit einem Linearantrieb benutzen. Darüber hinaus eignet sich diese Ausgestaltung natürlich auch für rotierende elektrische Maschinen, die ein quaderförmiges Gehäuse aufweisen, wobei wenigstens eine der Seitenwände dazu genutzt werden kann, den Direktumrichter aufzunehmen.

Insgesamt kann also erreicht werden, dass der Direktumrichter in die elektrische Maschine integriert werden kann. Ein eigenes Gehäuse für den Direktumrichter ist somit nicht mehr erforderlich. Dadurch kann eine gute Integration des Direktumrichters in die elektrische Maschine erreicht werden.

Weitere Vorteile und Merkmale ergeben sich aus der folgenden Beschreibung von Ausführungsbeispielen anhand der Figuren. In den Figuren bezeichnen gleiche Bezugszeichen gleiche Merkmale und Funktionen. Es zeigen:
- FIG 1: eine schematische Schaltbilddarstellung für einen konventionellen Umrichter zum Koppeln eines dreiphasigen Wechselspannungsnetzes mit einer dreiphasigen Asynchronmaschine;
- FIG 2: eine schematische Schaltbilddarstellung für einen Direktumrichter mit einer Mehrzahl von Matrixelementen zum Koppeln des dreiphasigen Wechselspannungsnetzes mit der dreiphasigen Asynchronmaschine;
- FIG 3: eine schematische Schaltbilddarstellung eines Matrixelements des Direktumrichters gemäß FIG 2;
- FIG 4: eine schematische Draufsicht auf das Matrixelement gemäß FIG 3;
- FIG 5: eine schematische Anordnung für einen Direktumrichter gemäß einer ersten Ausgestaltung mit Matrixelementen gemäß FIG 4;
- FIG 6: eine schematische Anordnung für einen Direktumrichter gemäß einer zweiten Ausgestaltung mit Matrixelementen gemäß FIG 4;
- FIG 7: eine schematische Seitenansicht für eine erste Ausgestaltung einer elektrischen Maschine mit einem Direktumrichter gemäß FIG 5;
- FIG 8: eine schematische Darstellung einer Stirnseitenansicht des Direktumrichters gemäß FIG 7;
- FIG 9: eine schematische Seitenansicht einer zweiten Ausgestaltung einer elektrischen Maschine mit einem Direktumrichter gemäß FIG 6, der in einer Oberseite eines quaderförmigen Gehäuses der elektrischen Maschine angeordnet ist und
- FIG 10: eine schematische Stirnseitenansicht der elektrischen Maschine gemäß FIG 9.

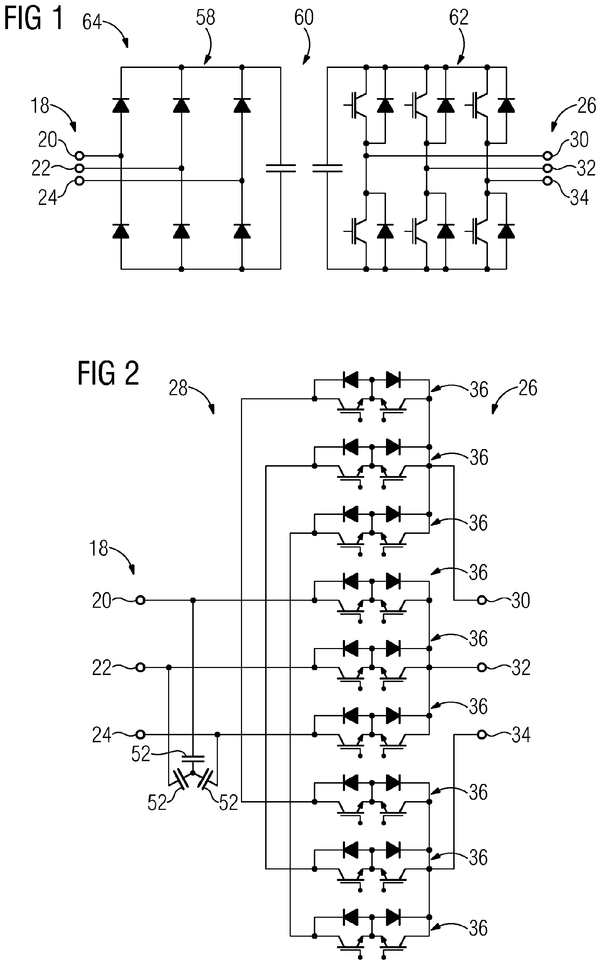

FIG 1 zeigt in einer schematischen Schaltbilddarstellung einen konventionellen Umrichter 64, der ausgebildet ist, ein dreiphasiges Wechselspannungsnetz 18 mit Wechselspannungsphasen 20, 22, 24 mit einer nicht weiter dargestellten dreiphasigen Asynchronmaschine als elektrische Maschine elektrisch zu koppeln. Die Asynchronmaschine weist eine Maschinenwicklung 26 als Ständerwicklung auf. Die Maschinenwicklung 26 umfasst die Phasen 30, 32, 34.

Der Umrichter 64 umfasst einen Brückengleichrichter 58 sowie einen mit dem Brückengleichrichter 58 gleichspannungsseitig gekoppelten Gleichspannungszwischenkreis 60. Am Gleichspannungszwischenkreis 60 ist ein dreiphasiger Wechselrichter 62 in konventioneller Ausführung angeschlossen, an dessen drei Ausgangsanschlüssen die Phasen 30, 32, 34 der Ständerwicklung 26 angeschlossen sind. Dieses Konzept ist im Stand der Technik bekannt. Der Umrichter 64 ist üblicherweise in einem separaten Schaltschrank getrennt von der Asynchronmaschine angeordnet.

FIG 2 zeigt in einer schematischen Schaltbilddarstellung einen Direktumrichter 28, der zum Anschließen an das dreiphasige Wechselspannungsnetz, wie zuvor erläutert, ausgebildet ist. Ferner ist der Direktumrichter 28 zum Anschließen an eine als Asynchronmaschine ausgebildete dreiphasige elektrische Maschine 10, 16, wie im Folgenden noch erläutert, ausgebildet und stellt hierfür Anschlüsse für die Phasen 30, 32, 34 bereit.

Wechselspannungsphasenseitig sind drei X-Kondensatoren 52 vorgesehen, die dazu dienen, eine Anpassung in Bezug auf elektromagnetische Verträglichkeit zu realisieren. Der Direktumrichter 28 umfasst vorliegend neun Matrixelemente 36 als Schaltelemente, die es erlauben, in vorgegebener Weise die gewünschten elektrischen Kopplungen zu realisieren, damit die gewünschte Energiewandlungsfunktionalität des Direktumrichters 28 erreicht werden kann. Zu diesem Zweck sind die Matrixelemente 36 mit einer nicht dargestellten Steuereinheit elektrisch gekoppelt, die für die Matrixelemente 36 entsprechende Schaltsignale bereitstellt. Die grundlegende Funktion des Direktumrichters ist dem Fachmann bekannt, sodass von einer detaillierten weiteren Erläuterung an dieser Stelle abgesehen werden kann.

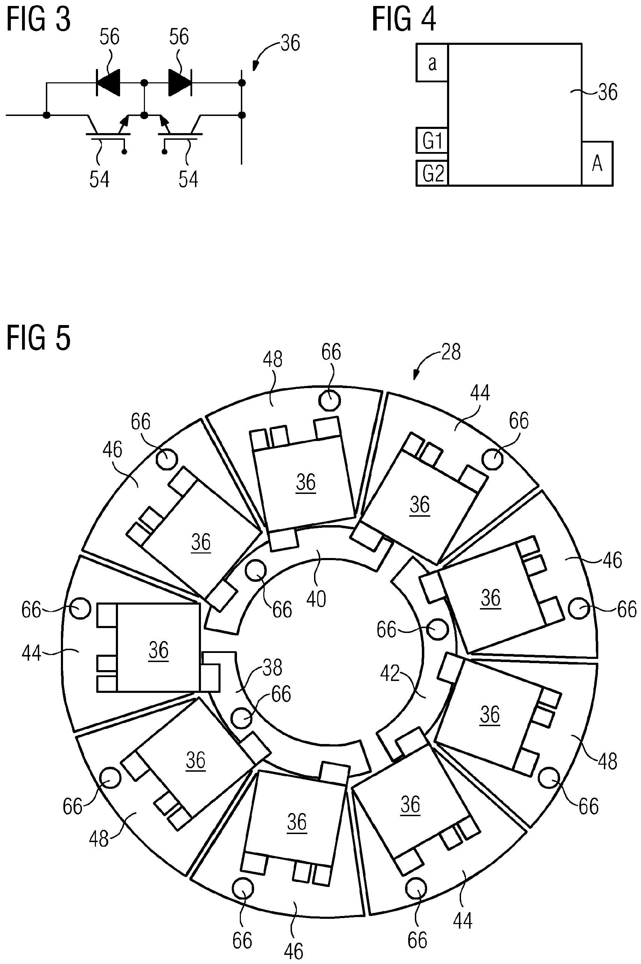

FIG 3 zeigt in einer schematischen Schaltbilddarstellung ein einzelnes der Matrixelemente 36. Zu erkennen ist, dass das Matrixelement 36 zwei antiseriell geschaltete IGBT 54 umfasst, die emitterseitig miteinander verbunden sind. Die Kollektoren der IGBT 54 stellen die jeweiligen Anschlüsse des Schaltelements beziehungsweise des Matrixelements 36 bereit. Zu jedem der IGBT 54 ist eine jeweilige Inversdiode 56 hinsichtlich der jeweiligen Kollektor-Emitter-Strecke parallelgeschaltet. Jeweilige Gate-Anschlüsse G1, G2 der IGBT 54 stellen entsprechende Steueranschlüsse des Matrixelements 36 bereit. Die Gate-Anschlüsse G1, G2 sind in nicht dargestellter Weise mit der nicht dargestellten Steuereinheit elektrisch verbunden, sodass sie durch die Steuereinheit mit den geeigneten Schaltsignalen beaufschlagt werden können, um die gewünschte Schaltfunktion im bestimmungsgemäßen Energiewandlungsbetrieb des Direktumrichters 28 realisieren zu können.

FIG 4 zeigt in einer schematischen Draufsicht eines der Matrixelemente 36 des Direktumrichters 28 gemäß FIG 3. Zu erkennen ist, dass das Matrixelement 36 gehäuselos die beiden IGBT 54 und deren Inversdioden 56 umfasst. Diese sind in einem gemeinsamen Halbleiterchip angeordnet. Die Bezugszeichen a und A bezeichnen die entsprechenden Schaltelementanschlüsse beziehungsweise Anschlüsse des Matrixelements 36. Die Bezugszeichen G1, G2 bezeichnen die entsprechenden Steueranschlüsse beziehungsweise Gate-Anschlüsse der IGBT 54.

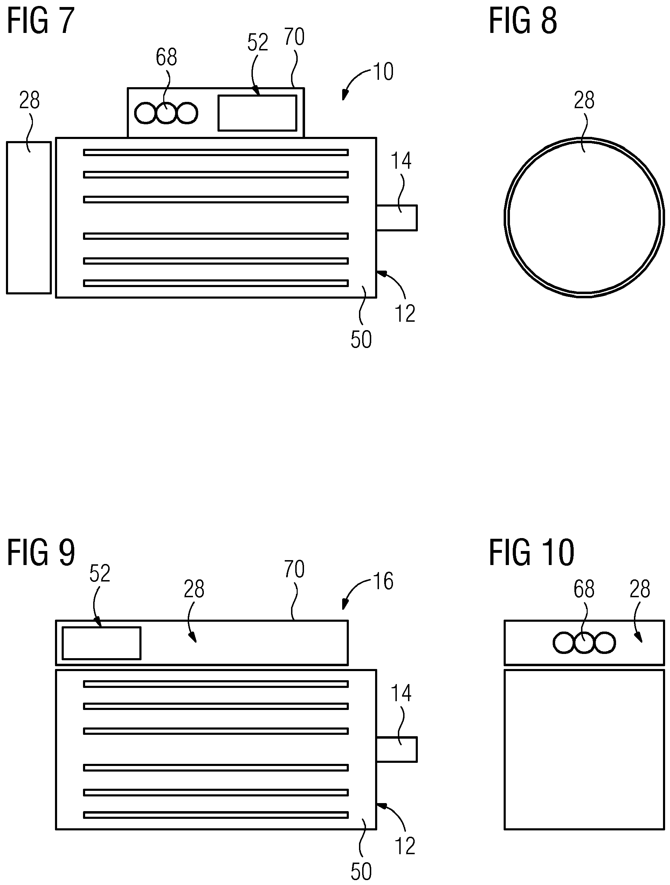

FIG 5 zeigt in einer schematischen ersten Ausgestaltung eine Anordnung für eine erste Ausgestaltung des Direktumrichters 28 gemäß FIG 2. Der Direktumrichter 28 weist für eine jeweilige der Phasen 30, 32, 34 der Maschinenwicklung 26 und für jede der Wechselspannungsphasen 20, 22, 24 jeweils eine Stromschiene 38, 40, 42, 44, 46, 48 auf, die abhängig von einer geometrischen Abmessung des Ständers 12 ausgebildet ist. Der Direktumrichter 28 gemäß FIG 5 ist vorliegend vorgesehen, in einem Lagerschild der Asynchronmaschine 10 (FIG 7, 8) angeordnet zu werden.

Aus FIG 7 und FIG 8 ist ersichtlich, dass die Asynchronmaschine 10 ein im Wesentlichen kreisrundes, zylinderförmiges Gehäuse 50 aufweist, in welchem ein Ständer 12 angeordnet ist, der eine nicht dargestellte Öffnung bereitstellt, in der ein Läufer 14 bewegbar angeordnet ist. Die elektrische Maschine 10 ist vorliegend als Asynchronmaschine ausgebildet, weshalb lediglich der Ständer 12 eine Ständerwicklung als Maschinenwicklung 26 aufweist. Die Ständerwicklung ist vorliegend als dreiphasige Wicklung ausgebildet.

Die Anordnung des Direktumrichters 28 gemäß FIG 5 in einem der beiden Lagerschilde der Asynchronmaschine 10 erfordert es, dass der Direktumrichter 28 vorzugsweise entsprechend gemäß FIG 5 ausgebildet ist. Die Stromschienen 38 bis 48 sind daher als Kreisringsegmente ausgebildet, die in einer Ebene radial und in Umfangsrichtung beabstandet voneinander angeordnet sind.

Um die erforderliche Kopplung zwischen den Stromschienen 38 bis 48 mittels der Matrixelemente 36 herzustellen, sind die Matrixelemente 36 in geeigneter Weise mit den Stromschienen 38 bis 48 mechanisch und elektrisch verbunden. Nicht dargestellt ist in FIG 5, dass die Steueranschlüsse G1, G2 an die nicht dargestellte Steuereinheit des Direktumrichters 28 angeschlossen sind, um die gewünschte Funktionalität realisieren zu können. Aus FIG 5 ist jedoch ersichtlich, dass die Stromschienen 38 bis 48 elektrische Anschlüsse 66 aufweisen, an denen die entsprechenden Anschlüsse des Wechselspannungsnetzes 18 beziehungsweise der Maschinenwicklung 26 beziehungsweise der Ständerwicklung angeschlossen werden können.

In dieser Ausgestaltung sind die Stromschienen 38 bis 48 kreisringsegmentförmig ausgebildet und in einer Ebene angeordnet. Dadurch kann eine besonders flache und bauraumoptimierte Konstruktion für die Anordnung in der Asynchronmaschine 10 gemäß Figuren 7, 8, und zwar insbesondere in deren Lagerschild, erreicht werden. Die Abmessungen der Stromschienen 38 bis 48 sind abhängig von einem Radius des Gehäuses 50 quer zur Längserstreckung des Ständers 12 gewählt, damit der Direktumrichter 28 in möglichst flacher Bauweise in den Lagerschild integriert werden kann.

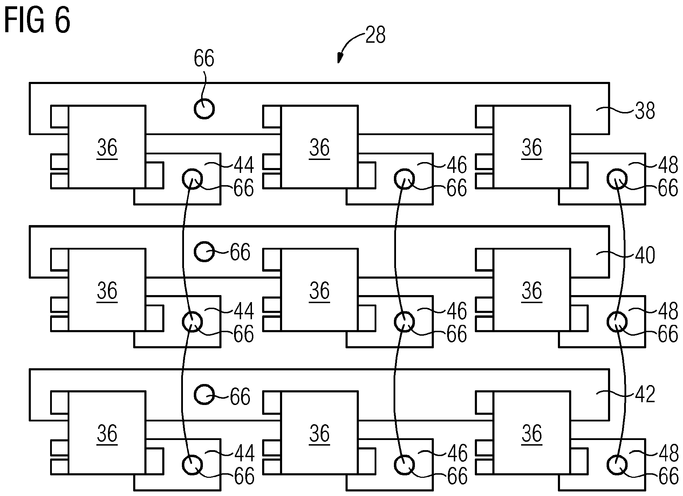

FIG 6 zeigt eine zweite Ausgestaltung für einen Matrixumrichter 28 mit den Matrixelementen 36 gemäß FIG 4. Diese Ausgestaltung des Direktumrichters 28 ist dazu vorgesehen, in einer Asynchronmaschine 16 gemäß der Figuren 9 und 10 angeordnet zu werden. Die elektrische Maschine 16 weist - im Unterschied zur Asynchronmaschine 10 gemäß Figuren 7, 8 - ein quaderförmiges Gehäuse 50 auf. Eine Oberseite des Gehäuses 50 umfasst eine Aufnahme für den Direktumrichter 28 gemäß FIG 6.

Damit der Direktumrichter 28 besonders günstig und kompakt ausgebildet werden kann, um in der Aufnahme des Gehäuses 50 gemäß Figuren 9, 10 angeordnet zu werden, ist er vorliegend gemäß der zweiten Ausgestaltung ausgebildet, bei der die Stromschienen 36 bis 48 im Wesentlichen stabförmig mit einem rechteckigen Querschnitt beziehungsweise einer rechteckigen Querschnittsfläche ausgebildet sind. Auch hier sind die Stromschienen 38 bis 48 in einer Ebene angeordnet. An elektrischen Anschlüssen 66 können die entsprechenden elektrischen Phasen 20, 22, 24 des Wechselspannungsnetzes 18 und die Phasen 30, 32, 34 der Maschinenwicklung beziehungsweise Ständerwicklung 26 angeschlossen werden.

Die Verbindung der Matrixelemente 36 mit den Stromschienen 38 bis 48 entspricht im Wesentlichen der, wie es bereits zur FIG 5 erläutert wurde. Von weiteren Ausführungen hierzu wird deshalb unter Verweis auf die voranstehenden Ausführungen an dieser Stelle abgesehen. Der Matrixumrichter 28 gemäß FIG 6 weist daher im Wesentlichen mit einer im Wesentlichen rechteckförmigen Grundfläche auf und eignet sich daher besonders günstig für den Einbau in die Aufnahme des Gehäuses 50 gemäß Figuren 9 und 10, die vorliegend ebenfalls als im Wesentlichen rechteckförmige Grundfläche ausgebildet ist. Eine Länge der Stromschienen 38 bis 48 ist von Abmessungen der Grundfläche der Aufnahme abhängig gewählt, sodass der Direktumrichter 28 in möglichst flacher Bauweise in der Aufnahme angeordnet werden kann.

Aus den Figuren 7, 9 und 10 ist ersichtlich, dass die elektrischen Maschinen 10, 16 einen jeweiligen Anschlusskasten 70 aufweisen, der einen jeweiligen Wechselspannungsnetzanschluss 68 bereitstellt. An dieser Stelle kann die elektrische Maschine 10, 16 mit dem Wechselspannungsnetz 18 elektrisch verbunden werden.

Aus FIG 9 ist ferner ersichtlich, dass das Gehäuse 50 den Anschlusskasten 70 umfasst, der seinerseits die Aufnahme für den Direktumrichter 28 und die X-Kondensatoren 52 bereitstellt. In der Ausgestaltung gemäß FIG 7 sind dort dagegen lediglich der Wechselspannungsnetzanschluss 68 angeordnet sowie ergänzend auch die X-Kondensatoren 52 angeordnet.

Die Ausführungsbeispiele zeigen, dass mit der Erfindung ein reduzierter Platzbedarf realisiert werden kann, sodass eine einfache Integration des Umrichters in die elektrische Maschine erreicht werden kann. Darüber hinaus ist das hierdurch erreichte System thermisch unkritischer, weil keine großen Zwischenkreiskondensatoren benötigt werden und etwaige Eingangskondensatoren, beispielsweise die X-Kondensatoren 52, kostengünstig und platzsparend positioniert werden können.

Insbesondere können folgende Vorteile erreicht werden:
Bei einer Wechselspannungsmaschine kann ein Umrichter als Direktumrichter auf einfache Weise kompakt und an die Bauform der elektrischen Maschine angepasst integriert werden, insbesondere montiert werden. Der Direktumrichter kann entweder in die elektrische Maschine integriert oder auch an die elektrische Maschine, insbesondere an ein Gehäuse der elektrischen Maschine angebaut werden. Etwaige Filterkondensatoren, insbesondere wechselspannungsnetzseitig, können thermisch entkoppelt beispielsweise im Anschlusskasten oder auch einem hinteren Maschinenende angeordnet werden.

Die voranstehenden Ausführungsbeispiele dienen ausschließlich der Erläuterung der Erfindung und sind für diese nicht beschränkend. Insbesondere ist die Erfindung nicht auf die Anwendung bei rotierenden elektrischen Maschinen beschränkt sondern kann auch bei Linearmaschinen oder dergleichen zum Einsatz angewendet werden.

## Patentansprüche

1. Elektrische Maschine (10,16) mit einem Ständer (12) sowie einem gegenüber dem Ständer (12) bewegbar angeordneten Läufer (14), wobei die elektrische Maschine (10,16) für einen Betrieb an einem Wechselspannungsnetz (18) ausgebildet ist, das wenigstens eine Wechselspannungsphase (20,22,24) bereitstellt, und wobei der Ständer (12) und/oder der Läufer (14) eine wenigstens zweiphasige Maschinenwicklung (26) aufweist, **gekennzeichnet durch** einen am Ständer (12) angeordneten Direktumrichter (28), der einerseits mit dem Wechselspannungsnetz (18) elektrisch koppelbar und andrerseits an die wenigstens zwei Phasen (30,32,34) der wenigstens zweiphasigen Maschinenwicklung (26) angeschlossen ist, zu welchem Zweck der Direktumrichter (28) eine Mehrzahl von Schaltelementen (36) zum elektrischen Koppeln der wenigstens einen Wechselspannungsphase (20,22,24) mit einer jeweiligen der Phasen (30,32,34) der wenigstens zweiphasigen Maschinenwicklung (26) abhängig von einem jeweiligen Schaltzustand des jeweiligen Schaltelements (36) aufweist.

2. Elektrische Maschine nach Anspruch 1, **dadurch gekennzeichnet, dass** der Direktumrichter (28) für eine jeweilige Phase (30,32,34) der wenigstens zweiphasigen Maschinenwicklung (26) und/oder für die wenigstens eine Wechselspannungsphase (20,22,24) jeweils wenigstens eine Stromschiene (38,40,42,44,46,48) aufweist, die abhängig von wenigstens einer geometrischen Abmessung des Ständers (12) ausgebildet ist.

3. Elektrische Maschine nach einem der vorhergehenden Ansprüche, **dadurch gekennzeichnet, dass** zumindest teilweise jeweils wenigstens eine Stromschiene (38, 40,42) für eine jeweilige Phase (30,32,34) der wenigstens zweiphasigen Maschinenwicklung (26) und wenigstens eine Stromschiene (44,46,48) für die wenigstens eine Wechselspannungsphase (20,22,24) vorgesehen sind, wobei die Stromschienen (38,40,42,44,46,48) stabförmig mit einer rechteckigen Querschnittfläche ausgebildet sind, wobei die maschinenwicklungsseitigen Stromschienen (38,40,42) einerseits und die wechselspannungsphasenseitigen Stromschienen (44,46,48) andrerseits in Bezug auf eine Montageposition am Ständer (12) in unterschiedlichen Ebenen angeordnet sind und wobei insbesondere die maschinenwicklungsseitigen Stromschienen (38,40,42) orthogonal zu den wechselspannungsphasenseitigen Stromschienen (44,46,48) angeordnet sind.

4. Elektrische Maschine nach Anspruch 3, **dadurch gekennzeichnet, dass** die Schaltelemente (36) an Kreuzungspunkten der maschinenwicklungsseitigen Stromschienen (38,40,42) mit der wenigstens einen wechselspannungsphasenseitigen Stromschiene (44,46,48) angeordnet sind.

5. Elektrische Maschine nach einem der vorhergehenden Ansprüche, **dadurch gekennzeichnet, dass** die Stromschienen (38,40,42,44,46,48) zumindest teilweise nach Art von Kreisringsegmenten ausgebildet sind, wobei die Stromschienen (38,40,42) für die wenigstens zweiphasige Maschinenwicklung (26) in einer Ebene radial beabstandet zu der wenigstens einen Stromschiene (44,46,48) für die wenigstens eine Wechselspannungsphase (20,22,24) angeordnet sind.

6. Elektrische Maschine nach Anspruch 5, **dadurch gekennzeichnet, dass** ein jeweiliges der Schaltelemente (36) mit einem ersten Anschluss an ein jeweiliges der Kreisringsegmente der maschinenwicklungsseitigen Stromschienen (38,40,42) und mit einem zweiten Anschluss an das wenigstens eine Kreisringsegment der wenigstens einen wechselspannungsphasenseitigen Stromschiene (44,46,48) angeschlossen ist.

7. Elektrische Maschine nach einem der vorhergehenden Ansprüche, **dadurch gekennzeichnet, dass** die Schaltelemente (36) durch antiseriell geschaltete Transistoren gebildet sind.

8. Elektrische Maschine nach Anspruch 7, **dadurch gekennzeichnet, dass** die Transistoren gehäuselos ausgebildet und insbesondere mittels direct bonding unmittelbar an die Stromschienen (38,40,42,44,46,48) angeschlossen sind.

9. Elektrische Maschine nach einem der vorhergehenden Ansprüche, **dadurch gekennzeichnet, dass** der Direktumrichter (28) zumindest teilweise in einem Lagerschild der elektrischen Maschine (10) angeordnet ist.

10. Elektrische Maschine nach einem der vorhergehenden Ansprüche, **gekennzeichnet durch** ein Gehäuse (50), wobei der Direktumrichter (28) zumindest teilweise in wenigstens einer Seitenwand des Gehäuses (50) angeordnet ist.
